(19) Europäisches Patentamt
European Patent Office
Office européen des brevets

(11) Veröffentlichungsnummer : **0 384 225 B1**

(12) # EUROPÄISCHE PATENTSCHRIFT

(45) Veröffentlichungstag der Patentschrift : **08.09.93 Patentblatt 93/36**

(51) Int. Cl.[5] : **B41M 5/38,** C09B 29/00, C09B 29/08

(21) Anmeldenummer : **90102465.3**

(22) Anmeldetag : **08.02.90**

(54) **Verwendung von Farbstoffen für das Sublimations-Transferverfahren.**

(30) Priorität : **23.02.89 DE 3905527**

(43) Veröffentlichungstag der Anmeldung : **29.08.90 Patentblatt 90/35**

(45) Bekanntmachung des Hinweises auf die Patenterteilung : **08.09.93 Patentblatt 93/36**

(84) Benannte Vertragsstaaten : **CH DE FR GB IT LI**

(56) Entgegenhaltungen :
**EP-A- 0 235 939**
**DE-A- 1 719 073**
**DE-A- 2 756 331**
**GB-A- 1 119 326**

(73) Patentinhaber : **CASSELLA Aktiengesellschaft**
**Hanauer Landstrasse 526**
**D-60386 Frankfurt (DE)**

(72) Erfinder : **Kunz, Erika, Dr.**
**Siemensstrasse 14**
**D-6100 Darmstadt (DE)**
Erfinder : **Bühler, Ulrich, Dr.**
**Kastanienweg 8**
**D-8755 Alzenau (DE)**
Erfinder : **Ritter, Josef, Dr.**
**Berliner Strasse 12**
**D-6238 Hofheim (DE)**

(74) Vertreter : **Urbach, Hans-Georg, Dr. et al**
**Hanauer Landstrasse 526**
**D-60386 Frankfurt (DE)**

EP 0 384 225 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von Farbstoffen bestimmter Konstitution für das Sublimations-Transferverfahren. Ein Teil der verwendeten Farbstoffe ist neu und wird zusammen mit dem Verfahren zu ihrer Herstellung im Rahmen der vorliegenden Erfindung beansprucht. Die Erfindung betrifft ferner einen Farbstoffträger für das Sublimations-Transferverfahren, ein Verfahren zu seiner Herstellung und ein Verfahren zur Übertragung von Farbstoffen.

Mit Hilfe des Sublimations-Transferverfahrens lassen sich hervorragende Farbbilder z.B. auf kunststoffbeschichtetem Papier oder auf Kunststoff-Folien nach Bildinformationen herstellen, die von elektronischen Bildquellen, wie Videokameras oder Videorekordern, von Fernsehbildschirmen oder Computern oder elektronischen Stillkameras etc. geliefert werden. Die Verarbeitung der elektronischen Bildinformationen erfolgt in Faksimilegeräten, Kopiergeräten oder Druckern, die einen Thermodruckkopf mit zahlreichen winzigen (z.B. 4 bis 16 pro mm) in einer Reihe angeordneten Heizelementen enthalten. Die digitalen Bildinformationen werden im Thermodruckkopf in verschiedene Heizstufen umgewandelt und den einzelnen Heizelementen zugeführt. Die Heizelemente drücken auf die Rückseite eines Farbbandes, das auf seiner Vorderseite eine Farbschicht besitzt, in der in Farbbandrichtung nacheinander Blöcke mit je einem Farbstoff der subtraktiven Grundfarben Gelb, Magenta und Cyan und gegebenenfalls noch Schwarz enthalten sind. Die Vorderseite des Farbbandes liegt mit der Farbschicht auf dem Aufzeichnungsmaterial, auf dem das farbige Bild erzeugt werden soll. Entsprechend der den Heizelementen zugeführten Heizenergie wird eine proportionale Menge an Farbstoff aus der Farbstoffschicht freigesetzt und auf das Aufzeichnungsmaterial übertragen. Farbband und Aufzeichnungsmaterial werden an dem Thermodruckkopf vorbeibewegt. Dabei wird zunächst linienweise ein Bild in einer Grundfarbe übertragen. Anschließend wird das volle Farbenspektrum des Bildes durch sequentielle Übertragung der beiden anderen Grundfarben und gegebenenfalls zusätzlich von Schwarz, erzeugt.

Die von den Heizelementen erzeugten Heizimpulse liegen im Bereich von Millisekunden. Es wird allgemein angenommen, daß die Farbstoffübertragung vom Farbband auf das Aufzeichnungsmaterial durch Sublimation erfolgt, doch werden von anderen Seiten auch andere Mechanismen der Farbstoffübertragung, z.B. eine Farbstoffverdampfung oder eine Farbstoffdiffusion, angenommen. Neben der Bezeichnung Sublimations-Transferverfahren sind auch andere Bezeichnungen, wie Farbstoff-diffusions-thermotransfer-prozeß und Thermotransferdruckverfahren, im Gebrauch. An dem geschilderten Prinzip des Sublimations-Transverfahrens sind selbstverständlich zahlreiche Abwandlungen möglich. So kann z.B. das Farbband mit den nacheinander angeordneten drei oder vier Farbflächen der Grundfarben durch drei bzw. vier Farbträger mit je einer Grundfarbe Gelb, Magenta, Cyan und gegebenenfalls Schwarz ersetzt sein.

Die Abstufung der Farben auf der fertigen Aufzeichnung wird beim Sublimations-Transferverfahren in einfacher Weise durch die Steuerung der von den Heizelementen abgegebenen Heizenergie beeinflußt, wodurch die Menge des absublimierenden und auf das Aufzeichnungsmaterial transferierten Farbstoffs eingestellt wird. Durch diese leichte Steuerbarkeit der Farbabstufungen besitzt das Sublimations-Transferverfahren Vorteile gegenüber anderen Farbübertragungsverfahren. Andererseits sind jedoch beim Sublimations-Transferverfahren nur solche Farbstoffe geeignet, welche die besonderen Erfordernisse dieses Verfahrens erfüllen. Hierzu zählt in erster Linie die Forderung, daß der Farbstoff unter den Arbeitsbedingungen des Sublimations-Transferverfahrens, also in Sekundenbruchteilen leicht und unzersetzt sublimier- oder verdampfbar ist, um eine ausreichende Übertragung auf das Aufzeichnungsmaterial zu gewährleisten.

Beim textilen Transferdruck wird zunächst auf einer Papierdruckmaschine ein Papier mit einem mehrfarbigen Dessin bedruckt. Dieses Dessin wird dann durch flächenförmige Einwirkung von Temperaturen von 180 bis 230°C auf Pressen oder Umdruckkalandern auf ein geeignetes textiles Material, zumeist Polyester, umgedruckt. Im Gegensatz zu dem eingangs erwähnten Sublimations-Transferverfahren für die Herstellung farbiger Aufzeichnungen sind beim textilen Transferdruck die Erhitzungszeiten wesentlich länger und liegen üblicherweise im Bereich von 20 bis 60 Sekunden. Dieser Umstand und andere Unterschiede zwischen textilem Transferdruck und Sublimations-Transferverfahren bewirken, daß die beim textilen Transferdruck brauchbaren Farbstoffe normalerweise für das Sublimations-Transferverfahren nicht oder nicht in optimaler Weise geeignet sind.

Ein für das Sublimations-Transferverfahren geeigneter Farbstoff soll z.B. folgende Eigenschaften besitzen: In einem engen Temperaturbereich innerhalb weniger Millisekunden unzersetzt auf das Aufzeichnungsmaterial übertragbar sein; seine Resublimation aus dem Aufzeichnungsmaterial soll möglichst gering sein; seine Bildstabilität in dem Aufzeichnungsmaterial soll lang und hoch sein, insbesondere soll das Bild stabil gegen die Einwirkung von Licht, Feuchtigkeit, Chemikalien, Wärme, Reibung und Kratzern und anderen Umwelteinflüssen sein; er muß einen für den Drei- bzw Vierfarbendruck geeigneten Grundfarbton aufweisen und sein molekularer Extinktionskoeffizient soll hoch sein; er soll leicht in organischen Lösungsmitteln löslich sein und gleichmäßige Aufzeichnungen liefern. Darüberhinaus soll der Farbstoff ungiftig und leicht herstellbar und gut

zu einer Druckfarbe verarbeitbar sein.

Die für das Sublimations-Transferverfahren bekanntgewordenen Farbstoffe z.B. C.I. Disperse Red 60, die Farbstoffe der US 4,695,288, US 4,764,178, DE-OS 36 38 756 und DE-OS 38 01 545 erfüllen die durch das Sublimations-Transferverfahren gestellten Forderungen noch nicht in ausreichendem Maße.

Der Erfindung lag die Aufgabe zugrunde, Farbstoffe anzugeben, die für das Sublimations-Transferverfahren hervorragend geeignet sind.

Die Erfindung betrifft die Verwendung von Monoazofarbstoffen der allgemeinen Formel I

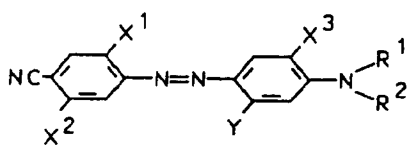

( I )

worin

$X^1$, $X^2$ Fluor, Chlor oder Brom,

$X^3$ Wasserstoff, Chlor, Methyl oder Alkoxy mit 1 bis 4 C-Atomen,

Y Wasserstoff, Chlor, Methyl, Alkoxy mit 1 bis 4 C-Atomen oder -NHCOR,

R Wasserstoff oder Alkyl mit 1 bis 6 C-Atomen,

$R^1$ Wasserstoff, Alkyl mit 1 bis 6 C-Atomen, Alkenyl mit 3 bis 5 C-Atomen, $-(CH_2)_nOR^3$, $-(CH)_2CN$,

$R^2$ Alkyl mit 1 bis 6 C-Atomen, Alkenyl mit 3 bis 5 C-Atomen, Cyclopentyl, Cyclohexyl, $-(CH_2)_mCN$, $-(CH_2)_mOR^4$,

$R^3$, $R^4$ Alkyl mit 1 bis 6 C-Atomen, Alkenyl mit 3 bis 5 C-Atomen,

n, m 2, 3 oder 4,

bedeuten, beim Sublimations-Transferverfahren, bei dem Farbstoffe von einem Träger durch kurzzeitige örtliche Wärmezufuhr auf ein Aufzeichnungsmaterial übertragen werden.

Die für $X^3$ und Y stehenden Alkoxyreste und die für R, $R^1$, $R^2$, $R^3$ und $R^4$ stehenden Alkyl- und Alkenylreste können geradkettig oder verzweigt sein. Alkylreste, die für R, $R^1$, $R^2$, $R^3$ und $R^4$ stehen können, sind z.B.: Methyl, Ethyl, n-Propyl, i-Propyl, n-Butyl, i-Butyl, sek.-Butyl, tert.-Butyl, n-Pentyl, n-Hexyl.

Alkenylreste, die für $R^1$, $R^2$, $R^3$ und $R^4$ stehen können, sind z.B.: 2-Propenyl, 2-Butenyl, 3-Butenyl, 2-Pentenyl, 3-Pentenyl, 4-Pentenyl.

$R^3$ und $R^4$ sowie n und m sind vorzugsweise gleich. Beispiele für die für $R^1$ oder $R^2$ stehenden $-(CH_2)_nOR^3$- oder $-(CH_2)_mOR^4$-Reste sind: Methoxyethyl, Methoxypropyl, Methoxybutyl. $R^3$ und $R^4$ bedeuten vorzugsweise Methyl und Ethyl. Die für $R^1$ und $R^3$ stehenden $-(CH_2)_mCN$-Reste sind z.B.: 2-Cyanoethyl, 3-Cyanopropyl, 4-Cyanobutyl.

Für $R^1$ ist der Rest $-(CH_2)_nOR^3$ bevorzugt. Für $R^2$ sind die Reste $-(CH_2)_mCN$ und $-(CH_2)_mOR^4$ bevorzugt. Besonders bevorzugte Reste $R^1$ und $R^2$ sind Alkylreste mit 2 bis 4 C-Atomen. Ganz besonders bevorzugt sind die Reste $R^1$ und $R^2$ in sich gleich.

Für $X^1$ und $X^2$ ist Chlor bevorzugt. Ganz besonders bevorzugt sind $X^1$ und $X^2$ gleich.

Die für Y und $X^3$ stehenden Alkoxyreste mit 1 bis 4 C-Atomen können beispielsweise sein: Methoxy, Ethoxy, n-Propoxy, n-Butoxy, von denen Methoxy und Ethoxy bevorzugt sind.

Bevorzugte Kombinationen für $X^3$/Y sind: Wasserstoff/Chlor; Alkoxy mit 1 bis 4 C-Atomen/-NHCOR; Alkoxy mit 1 bis 4 C-Atomen/Chlor; Methyl/Wasserstoff; Alkoxy mit 1 bis 4 C-Atomen/Wasserstoff; Chlor/Wasserstoff.

Besonders bevorzugte Kombinationen für $X^3$/Y sind: Alkoxy mit 1 bis 4 C-Atomen/Methyl; Alkoxy mit 1 bis 4 C-Atomen/Alkoxy mit 1 bis 4 C-Atomen; Chlor/-NHCOR.

Ganz besonders bevorzugte Kombinationen für $X^3$/Y sind: Wasserstoff/-NHCOR; Wasserstoff/Methyl; Wasserstoff/Alkoxy mit 1 bis 4 C-Atomen.

Bevorzugt verwendete Monoazofarbstoffe der Formel I sind solche, in denen $X^1$, $X^2$, $R^1$ und $R^2$ die bevorzugten Bedeutungen sowie $X^3$/Y die bevorzugten Kombinationen haben.

Besonders bevorzugt verwendete Monoazofarbstoffe der Formel I sind solche, in denen $X^1$, $X^2$, $R^1$ und $R^2$ die besonders bevorzugten Bedeutungen sowie $X^3$/Y die besonders bevorzugten Kombinationen haben.

Ganz besonders bevorzugt verwendete Monoazofarbstoffe der Formel I sind solche, in denen $X^1$, $X^2$, $R^1$ und $R^2$ die ganz besonders bevorzugten Bedeutungen haben, sowie diejenigen, in denen $X^3$/Y die ganz besonders bevorzugten Kombinationen haben.

Farbstoffe der Formel I, wobei $X^1$, $X^2$, $X^3$, Y, R, $R^1$ die angegebenen Bedeutungen besitzen, Y für den Fall, daß $R^1$ Wasserstoff, Alkyl mit 1 bis 6 C-Atomen oder Alkenyl mit 3 bis 5 C-Atomen bedeutet, jedoch nicht Wasserstoff, Chlor, Methyl oder -NHCOR sein kann, sind neu und werden im Rahmen der vorliegenden Erfindung zusammen mit dem Verfahren zur ihrer Herstellung beansprucht.

Die erfindungsgemäßen und die erfindungsgemäß verwendeten Farbstoffe können in an sich bekannter Weise hergestellt werden, indem man ein Amin der allgemeinen Formel II, in der $X^1$ und $X^2$ die bereits genannten Bedeutungen besitzen,

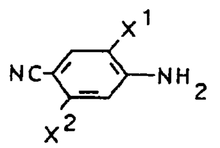

(II)

diazotiert und auf eine Kupplungskomponente der allgemeinen Formel III

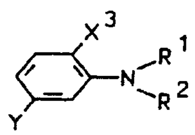

(III)

in der $X^3$, Y, $R^1$ und $R^2$ die bereits angegebenen Bedeutungen haben, kuppelt.

Aus den Aminen der allgemeinen Formel II werden Lösungen von Diazoniumverbindungen in an sich bekannter Weise durch Einwirkung von salpetriger Säure oder anderen Nitrosoniumionen bildenden Systemen in einem sauren wäßrigen Medium, einer Niederalkancarbonsäure, wie z.B. Ameisensäure, Essigsäure oder Propionsäure oder deren Mischungen oder einem organischen Lösungsmittel bei Temperaturen von 0 bis 40°C erhalten.

Die Kupplung erfolgt ebenfalls in an sich bekannter Weise durch Vereinigung der erhaltenen Lösung der Diazoniumverbindung mit einer Lösung der Kupplungskomponente bei Temperaturen von 0 bis 40°C, vorzugsweise 0 bis 25°C, in einem geeigneten Lösungsmittel, wie z.B. einem Alkanol mit 1 bis 4 C-Atomen, Dimethylformamid, vorzugsweise in mit Schwefelsäure, Salzsäure oder Phosphorsäure angesäuertem Wasser oder einer gegebenenfalls wasserhaltigen Niederalkancarbonsäure oder einem Niederalkancarbonsäuregemisch, gegebenenfalls auch in Gegenwart eines mit Wasser begrenzt mischbaren Alkanols. In manchen Fällen kann es zweckmäßig sein, während der Kupplung den pH-Wert abzupuffern, z.B. durch Zugabe von Natriumacetat. Die Kupplung ist nach einigen Stunden beendet, und der Farbstoff der Formel I kann wie üblich isoliert und getrocknet werden.

Die benötigten Ausgangsverbindungen der allgemeinen Formeln II und III lassen sich aus bekannten Handelsprodukten nach bekannten Verfahren herstellen.

So ist z.B. die Diazokomponente der Formel II zugänglich über eine Cyan-Sandmeyer-Reaktion aus dem technisch verfügbaren 2,5-Dichlor-4-nitranilin mit anschließender Bechamp-Reduktion oder Hydrierung zum Amin oder durch Cyan-Sandmeyer-Reaktion mit dem N-monoacetylierten 2,5-Dichlorphenylendiamin-1,4 mit anschließender hydrolytischer Abspaltung der Acetyl-Schutzgruppe.

Die erfindungsgemäß für das Sublimations-Transferverfahren verwendeten Farbstoffe der Formel I zeichnen sich gegenüber den bisher für diesen Zweck verwendeten Farbstoffen z.B. insbesondere durch folgende Vorteile aus: bessere und gleichartige Sublimationsfähigkeit, höhere Lichtechtheiten, höhere Löslichkeiten in organischen Lösungsmitteln, wie z.B.in MEK (Methylethylketon) und Toluol, geringere Resublimation aus dem Aufzeichnungsmaterial.

In der nachfolgenden Tabelle werden beispielhaft einige Eigenschaften erfindungsgemäß zu verwendender Farbstoffe gemäß den nachfolgenden Beispielen 1 bis 4 im Vergleich zu denen des bekannten Farbstoffs C.I. Disperse Red 60 aufgeführt.

| Farbstoff | Lichtechtheit | Sublimationstemperatur | Löslichkeit in MEK | Löslichkeit in Toluol |
|---|---|---|---|---|
| Beispiel 1 | 4 - 5 | 160°C | >30g/l | >30g/l |
| Beispiel 2 | 4 - 5 | 170°C | >30g/l | >30g/l |
| Beispiel 3 | 4 | 165°C | >30g/l | >30g/l |
| Beispiel 4 | 4 | 160°C | >30g/l | >30g/l |
| C.I.Disperse Red 60 | 2 - 3 | 160°C | 11g/l | 8g/l |

Die Lichtechtheitsprüfung wird an einer 1% Polymerlackfärbung durchgeführt. Die Belichtung erfolgt nach DIN 54 004. Als Vergleich dient die achtstufige blaue Wollskala. Die Note 1 bedeutet eine sehr geringe Lichtechtheit.

Die Sublimationstemperatur des Farbstoffs läßt sich schnell und einfach wie folgt bestimmen:

Ein inerter Träger, beispielsweise Lösch- oder Filtrierpapier, wird in eine, beispielsweise 0,25%ige, Lösung des zu prüfenden Farbstoffs in einem organischen Lösungsmittel, beispielsweise in Ethylacetat, getaucht. Die so hergestellte Tauchfärbung wird an der Luft getrocknet. Der gefärbte Träger wird auf einer Kofler-Heizbank im Temperaturbereich von 100 bis 200°C kurzzeitig aufgeheizt und der absublimierende Farbstoff auf einen im kurzen Abstand (weniger als 1 mm) darüber befindlichen Polyesterfilm übertragen. Die in die Polyesterfolie übergewanderte Farbstoffmenge läßt sich photometrisch bestimmen. Als Sublimationsstemperatur gilt die Temperatur, bei der visuell eine deutliche Färbung auf dem Film zu erkennen ist.

Die Herstellung der bei dem Sublimations-Transferverfahren zur Übertragung der Farbstoffe benötigten Farbstoffträger erfolgt in an sich bekannter Weise. Der zur Anwendung kommende Farbstoff der Formel I wird, gegebenenfalls im Gemisch mit einem oder mehreren anderen Farbstoffen der Formel I und/oder im Gemisch mit einem oder mehreren anderen Farbstoffen, zusammen mit einem Bindemittel oder Verdicker, z.B. in Wasser oder in einem organischen Lösemittel, zu einer Druckfarbe verarbeitet. Geeignete organische Lösemittel sind z.B. Methylethylketon, Toluol, Butanol oder Chlorbenzol. Die Druckfarbe kann den Farbstoff in dispergierter und/oder vorzugsweise in gelöster Form enthalten. Bei einem dispergierten Farbstoff ist seine Teilchengröße zweckmäßigerweise gleich oder kleiner als 1 µm. Als Bindemittel oder Verdicker sind beispielsweise geeignet: Methyl- oder Ethylcellulose, Polymerisate der Acrylsäure und Methacrylsäure, Polystyrol, Polycarbonate, Polysulfone, Polyethersulfone, Polyesterharze etc. Die Druckfarbe wird dann beispielsweise auf einer Beschichtungsmaschine oder mit einer Rakel in der zur Anwendung kommenden Schichtdicke, z.B. 3 bis 7 µm auf einen inerten Träger aufgetragen und danach getrocknet. Nach dem Trocknen kann die Dicke der Farbstoffschicht z.B. 0,1 bis 5 µm betragen. Geeignete inerte Trägermaterialien bestehen beispielsweise aus Papier, wie Kondensatorpapier, Seidenpapier, Kunstdruckpapier oder aus Kunststoff. Beispielsweise sind Kunststoff-Folien aus Polyester, wie z.B. Polyethylenterephthalat, Polyamid, Polyimid oder Polyaramid geeignet. Das Trägermaterial kann z.B. eine Dicke von 3 bis 50 µm besitzen und muß dicht sein und soll eine hohe Wärmeleitfähigkeit aufweisen. Die Druckfarbe kann neben den bereits genannten Bestandteilen noch weitere Bestandteile, wie z.B. Dispergiermittel, Antioxydationsmittel und/oder Viskositätsregler etc. enthalten. Gegebenenfalls enthält der Farbstoffträger in bekannter Weise noch andere Schichten, z.B. auf der Rückseite eine wärmebeständige Gleitschicht zur Verbesserung der Laufeigenschaften und Wärmebeständigkeit gegenüber den Heizelementen des Thermodruckkopfes.

Als Aufzeichnungsmaterialien sind Folien aus temperaturstabilen Kunststoffen, insbesondere aus Polyester, geeignet, welche die zu transferierenden Farbstoffe aufzunehmen vermögen. Weiterhin sind als Aufzeichnungsmaterialien z.B. Papiere und dergleichen geeignet, die mit den vorgenannten Kunststoffen, insbesondere Polyester, beschichtet sind.

Bei dem Verfahren zur Übertragung von Farbstoffen nach dem Sublimations-Thermoverfahren werden die Farbstoffe von dem Träger durch kurzzeitige, z.B. im Bereich von Millisekunden liegende, örtliche Wärmezufuhr, z.B. über die Heizelemente eines Thermodruckkopfes sublimiert oder verdampft und auf das Aufzeichnungsmatrial übertragen.

Die erfindungsgemäß verwendeten Farbstoffe liefern bei dem Sublimations-Transferverfahren farbstarke, gelbstichig rote bis rotstichig violette Farbpunkte bzw. Bilder mit sehr guten Echtheitseigenschaften und einer geringen Resublimation.

Beispiel 1:

Ein Filterpapierstreifen (Binzer Qualität, AA, glatt, ca. 70g/m²) wird in eine Lösung von 0,25 g des Farbstoffs der Formel

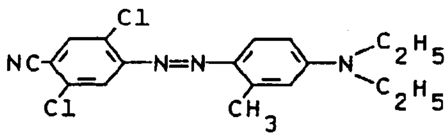

in 99,75 g Ethylacetat 1 Minute lang eingetaucht und dann an der Luft getrocknet. Die Prüfung der Thermosublimation nach dem oben beschriebenen Verfahren zeigt einen Sublimationsbeginn bei 160°C.

Der Farbstoff wird wie folgt hergestellt:

18,7 g 2,5-Dichlor-5-aminobenzonitril werden bei 15° bis 20°C in 100 ml Eisessig mit 33,0 g Nitrosylschwefelsäure diazotiert und bei 0°C bis 5°C unter gleichzeitiger Zugabe von 500 g Eis auf 17,1 g 3-Methyl-N,N-diethylanilin, die vorher in 250 ml Wasser mit 25 ml roher Salzsäure gelöst wurden, gekuppelt. Nach beendeter Kupplung wird der entstandene Farbstoff filtriert, mit Wasser neutral gewaschen und unter vermindertem Druck getrocknet. Es werden 33,4 g des Farbstoffs erhalten, der bei 518 nm sein Absorptionsmaximum hat.

Die anderen erfindungsgemäßen und erfindungsgemäß verwendeten Farbstoffe werden analog hergestellt.

Beispiel 2:

Die Prüfung der Thermosublimation einer Papiertauchfärbung hergestellt wie im Beispiel 1 beschrieben, unter Verwendung des Farbstoffs der Formel

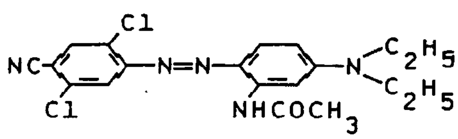

zeigt einen Sublimationsbeginn bei 170°C.

Beispiel 3:

Die Prüfung der Thermo-Sublimation einer Papiertauchfärbung wie im Beispiel 1 beschrieben, unter Verwendung des Farbstoffs der Formel

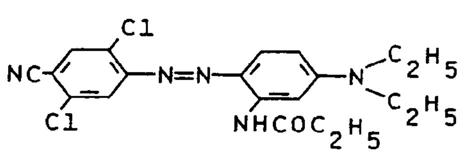

zeigt einen Sublimationsbeginn bei 165°C.

Beispiel 4:

Der Sublimationsbeginn einer Papiertauchfärbung, hergestellt wie im Beispiel 1 beschrieben, unter Verwendung des Farbstoffs der Formel

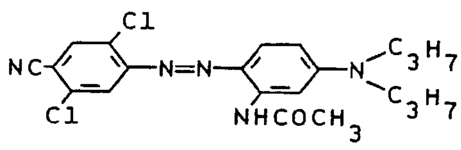

liegt bei 160°C.

Beispiel 5:

Der Sublimationsbeginn einer Papiertauchfärbung, hergestellt wie im Beispiel 1 beschrieben, unter Verwendung des Farbstoffs der Formel

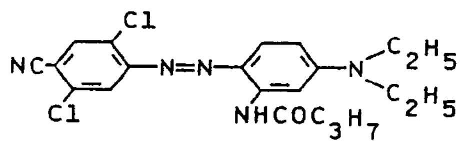

liegt bei 155°C.

Der Farbstoff wird wie folgt hergestellt:

18,7 g 2,5-Dichlor-5-aminobenzonitril werden bei 15° bis 20°C in 100 ml Eisessig mit 33,0 g Nitrosylschwefelsäure diazotiert und bei 0°C bis 5°C unter gleichzeitiger Zugabe von 500 g Eis auf 24,6 g N-n-Butyryl-N',N'-diethylphenylendiamin-1,3, die vorher in 250 ml Wasser mit 25 ml roher Salzsäure gelöst wurden, gekuppelt. Nach beendeter Kupplung wird der entstandene Farbstoff filtriert, mit Wasser neutral gewaschen und unter vermindertem Druck getrocknet. Es werden 38 g des Farbstoffs erhalten, der bei 530 nm sein Absorptionsmaximum hat.

Beispiel 6

10 Gew.Teile des Farbstoffs des Beispiels 1 werden mit 10 Gew.Teilen Celluloseacetat und 80 Gew.Teilen MEK zu einer homogenen Druckfarbe verarbeitet und diese mit einer 6 µm Rakel auf Papier abgezogen und getrocknet.

Der so hergestellte Transferträger wird mit seiner Farbschichtseite in Kontakt mit dem Aufzeichnungsmaterial gebracht und mit einem üblichen Heizkopf von der Rückseite des Transferträger her eine Aufzeichnung übertragen. Es werden 8 Punkte/mm innerhalb von 8 msec bei einer elektrischen Leistung von 0.25 Watt/Heizelement übertragen.

Die erhaltene Aufzeichnung von blaustichig-roter Farbe ist klar und deutlich und besitzt hervorragende Echtheiten.

In den folgenden Tabellen 1 bis 12 sind weitere erfindungsgemäß verwendete Farbstoffe mit ähnlich gutem Sublimationsverhalten und gutem Echtheitsniveau aufgeführt.

In den Tabellen 1 bis 12 ist in der letzten Spalte die Nuance angegeben, die beim Sublimations-Transferverfahren auf mit Polyester beschichtetem Papier erhalten wird. Die dabei benutzten Angaben bedeuten:

1 = blaustichiges Rot
2 = Rot
3 = gelbstichiges Rot
4 = rotstichiges Violett

## Tabelle 1

Farbstoffe der Formel

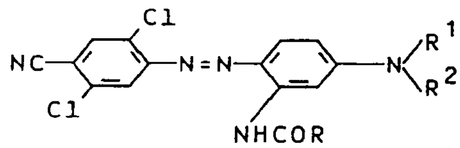

| Beisp. Nr. | R | $R^1$ | $R^2$ | Nuance |
|---|---|---|---|---|
| 07 | sek.$C_4H_9$ | $C_2H_5$ | $C_2H_5$ | 1 |
| 08 | n-$C_5H_{11}$ | $C_2H_5$ | $C_2H_5$ | 1 |
| 09 | $CH(CH_3)C_3H_7$ | $C_2H_5$ | $C_2H_5$ | 1 |
| 10 | $CH(C_2H_5)_2$ | $C_2H_5$ | $C_2H_5$ | 1 |
| 11 | $CH_3$ | H | n-$C_3H_7$ | 1 |
| 12 | $C_2H_5$ | n-$C_3H_7$ | n-$C_3H_7$ | 1 |
| 13 | n-$C_3H_7$ | n-$C_3H_7$ | n-$C_3H_7$ | 1 |
| 14 | i-$C_3H_7$ | n-$C_3H_7$ | n-$C_3H_7$ | 1 |
| 15 | n-$C_4H_9$ | n-$C_3H_7$ | n-$C_3H_7$ | 1 |
| 16 | sek.$C_4H_9$ | n-$C_3H_7$ | n-$C_3H_7$ | 1 |
| 17 | $CH(CH_3)C_3H_7$ | n-$C_3H_7$ | n-$C_3H_7$ | 1 |

| Beisp. Nr. | R | $R^1$ | $R^2$ | Nuance |
|---|---|---|---|---|
| 18 | $C_2H_5$ | $CH_3$ | $CH_3$ | 1 |
| 19 | $n-C_3H_7$ | $CH_3$ | $CH_3$ | 1 |
| 20 | $n-C_4H_9$ | $CH_3$ | $CH_3$ | 1 |
| 21 | $CH_3$ | $n-C_4H_9$ | $n-C_4H_9$ | 1 |
| 22 | $C_2H_5$ | $n-C_4H_9$ | $n-C_4H_9$ | 1 |
| 23 | $i-C_3H_7$ | $n-C_4H_9$ | $n-C_4H_9$ | 1 |
| 24 | $C_2H_5$ | $CH_3$ | $C_2H_5$ | 1 |
| 25 | $i-C_3H_7$ | $CH_3$ | $n-C_3H_7$ | 1 |
| 26 | $n-C_3H_7$ | $CH_3$ | $n-C_3H_7$ | 1 |
| 27 | $CH_3$ | $CH_3$ | $n-C_4H_9$ | 1 |
| 28 | $C_2H_5$ | $CH_3$ | $n-C_4H_9$ | 1 |
| 29 | $n-C_3H_7$ | $CH_3$ | $n-C_4H_9$ | 1 |
| 30 | $CH_3$ | $CH_3$ | $n-C_5H_{11}$ | 1 |
| 31 | $C_2H_5$ | $CH_3$ | $n-C_6H_{13}$ | 1 |
| 32 | $CH_3$ | $C_2H_5$ | $n-C_3H_7$ | 1 |
| 33 | $C_2H_5$ | $C_2H_5$ | $n-C_3H_7$ | 1 |
| 34 | $i-C_3H_7$ | $C_2H_5$ | $n-C_3H_7$ | 1 |
| 35 | $i-C_4H_9$ | $C_2H_5$ | $n-C_3H_7$ | 1 |
| 36 | $CH_3$ | $C_2H_5$ | $n-C_4H_9$ | 1 |
| 37 | $n-C_3H_7$ | $C_2H_5$ | $n-C_4H_9$ | 1 |
| 38 | $CH_3$ | $C_2H_5$ | $n-C_5H_{11}$ | 1 |
| 39 | $i-C_3H_7$ | $i-C_3H_7$ | $n-C_4H_9$ | 1 |
| 40 | $CH_3$ | $n-C_3H_7$ | $n-C_6H_{13}$ | 1 |
| 41 | $C_2H_5$ | $n-C_4H_9$ | $n-C_5H_{11}$ | 1 |
| 42 | $CH_3$ | $n-C_6H_{13}$ | $n-C_6H_{13}$ | 1 |
| 43 | $CH_3$ | $CH_3$ | $i-C_3H_7$ | 1 |
| 44 | $C_2H_5$ | $CH_3$ | $i-C_3H_7$ | 1 |
| 45 | $n-C_3H_7$ | $CH_3$ | $sek.C_4H_9$ | 1 |
| 46 | $C_2H_5$ | $CH_3$ | $i-C_4H_9$ | 1 |
| 47 | $C_2H_5$ | $CH_3$ | $i-C_5H_{11}$ | 1 |
| 48 | $CH_3$ | $CH_3$ | $C_5H_{11}-2$ | 1 |
| 49 | $C_2H_5$ | $C_2H_5$ | $i-C_3H_7$ | 1 |

| Beisp. Nr. | R | $R^1$ | $R^2$ | Nuance |
|---|---|---|---|---|
| 50 | $i-C_3H_7$ | $C_2H_5$ | $i-C_3H_7$ | 1 |
| 51 | $CH_3$ | $C_2H_5$ | $i-C_4H_9$ | 1 |
| 52 | $n-C_3H_7$ | $C_2H_5$ | $i-C_4H_9$ | 1 |
| 53 | $n-C_5H_{11}$ | $C_2H_5$ | $C_5H_{11}-3$ | 1 |
| 54 | $CH_3$ | $n-C_3H_7$ | $i-C_3H_7$ | 1 |
| 55 | $CH(CH_3)C_3H_7$ | $n-C_3H_7$ | $i-C_3H_7$ | 1 |
| 56 | $C_2H_5$ | $n-C_4H_9$ | $i-C_3H_7$ | 1 |
| 57 | $CH_3$ | $n-C_4H_9$ | $i-C_4H_9$ | 1 |
| 58 | $CH_3$ | $n-C_6H_{13}$ | $i-C_3H_7$ | 1 |
| 59 | $i-C_3H_7$ | $i-C_3H_7$ | $i-C_3H_7$ | 1 |
| 60 | $C_2H_5$ | $i-C_3H_7$ | $i-C_4H_9$ | 1 |
| 61 | $CH_3$ | $i-C_4H_9$ | $i-C_4H_9$ | 1 |
| 62 | $CH_3$ | $CH_2CH=CH_2$ | $CH_2CH=CH_2$ | 2 |
| 63 | $C_2H_5$ | $CH_2CH=CH_2$ | $CH_2CH=CH_2$ | 2 |
| 64 | $n-C_3H_7$ | $CH_2CH=CH_2$ | $CH_2CH=CH_2$ | 2 |
| 65 | $C_2H_5$ | $CH_2CH=CHCH_3$ | $CH_2CH=CHCH_3$ | 2 |
| 66 | $n-C_5H_{11}$ | $CH_2CH=CH_2$ | $CH_2CH=CH_2$ | 2 |
| 67 | $C_2H_5$ | $C(CH_3)=CH_2$ | $CH_2CH=CH_2$ | 2 |
| 68 | $i-C_3H_7$ | $CH_3$ | $CH_2CH=CH_2$ | 2 |
| 69 | $n-C_3H_7$ | $C_2H_5$ | $CH_2CH=CH_2$ | 2 |
| 70 | $C_2H_5$ | $n-C_3H_7$ | $CH_2CH=CH_2$ | 2 |
| 71 | $C_2H_5$ | $C_2H_5$ | $CH_2CH=CHCH_3$ | 2 |
| 72 | $CH_3$ | $n-C_4H_9$ | $CH_2CH=CH_2$ | 2 |
| 73 | $n-C_3H_7$ | H | $C_2H_5$ | 2 |
| 74 | $i-C_3H_7$ | H | $C_2H_5$ | 2 |
| 75 | $C_2H_5$ | H | $n-C_4H_9$ | 2 |
| 76 | $n-C_4H_9$ | H | $n-C_4H_9$ | 2 |
| 77 | $C_2H_5$ | H | $CH_2CH=CH_2$ | 3 |
| 78 | $CH_3$ | H | $i-C_3H_7$ | 2 |
| 79 | $n-C_3H_7$ | H | $i-C_3H_7$ | 2 |
| 80 | $C_4H_9-2$ | H | $i-C_3H_7$ | 2 |
| 81 | $CH_3$ | H | $i-C_4H_9$ | 2 |
| 82 | $i-C_3H_7$ | H | $i-C_4H_9$ | 2 |

| Beisp. Nr. | R | $R^1$ | $R^2$ | Nuance |
|---|---|---|---|---|
| 83 | $CH_3$ | H | sek.$C_4H_9$ | 2 |
| 84 | $C_2H_5$ | H | sek.$C_4H_9$ | 2 |
| 85 | n-$C_3H_7$ | H | sek.$C_4H_9$ | 2 |
| 86 | n-$C_4H_9$ | H | sek.$C_4H_9$ | 2 |
| 87 | $CH_3$ | H | $C_5H_{11}$-2 | 2 |
| 88 | $C_2H_5$ | H | $C_5H_{11}$-2 | 2 |
| 89 | $CH_3$ | H | $C_5H_{11}$-3 | 2 |
| 90 | i-$C_3H_7$ | H | $C_5H_{11}$-3 | 2 |
| 91 | $CH_3$ | H | cyclo-$C_6H_{11}$ | 2 |
| 92 | n-$C_3H_7$ | H | cyclo-$C_6H_{11}$ | 2 |
| 93 | $C_2H_5$ | H | cyclo-$C_5H_9$ | 2 |
| 94 | i-$C_3H_7$ | H | cyclo-$C_5H_9$ | 2 |
| 95 | H | n-$C_3H_7$ | n-$C_3H_7$ | 1 |
| 96 | H | $C_2H_5$ | n-$C_3H_7$ | 1 |
| 97 | H | n-$C_4H_9$ | n-$C_4H_9$ | 1 |
| 98 | H | H | sek.$C_4H_9$ | 1 |
| 99 | H | H | $C_5H_{11}$-2 | 1 |
| 100 | H | $CH_2CH=CH_2$ | $CH_2CH=CH_2$ | 2 |
| 101 | $CH_3$ | $(CH_2)_2OCH_3$ | $(CH_2)_2OCH_3$ | 2 |
| 102 | $CH_3$ | $(CH_2)_2OCH_3$ | $(CH_2)_2CN$ | 3 |
| 103 | $CH_3$ | $(CH_2)_2OC_2H_5$ | $C_2H_5$ | 2 |
| 104 | $C_2H_5$ | $(CH_2)_2OC_2H_5$ | $C_2H_5$ | 2 |
| 105 | n-$C_3H_7$ | $(CH_2)_2OCH_3$ | $CH_2CH=CH_2$ | 2 |
| 106 | n-$C_3H_7$ | $(CH_2)_4OCH_3$ | n-$C_3H_7$ | 2 |
| 107 | n-$C_3H_7$ | $(CH_2)_2CN$ | n-$C_2H_5$ | 3 |
| 108 | n-$C_3H_7$ | $(CH_2)_3CN$ | $C_2H_5$ | 3 |

Die vorstehenden Farbstoffe Nr. 101 bis 108 sind neu.

Tabelle 2

Farbstoffe der Formel

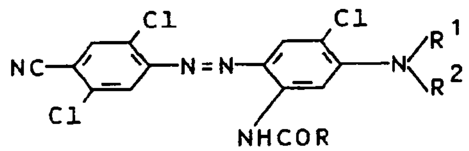

| Beisp. Nr. | R | $R^1$ | $R^2$ | Nuance |
|---|---|---|---|---|
| 01 | $n-C_3H_7$ | H | $C_2H_5$ | 1 |
| 02 | $C_2H_5$ | H | $n-C_3H_7$ | 1 |
| 03 | $i-C_3H_7$ | H | $i-C_3H_7$ | 1 |
| 04 | $CH_3$ | H | $n-C_4H_9$ | 1 |
| 05 | $CH_3$ | H | sek.$C_4H_9$ | 1 |
| 06 | $C_2H_5$ | H | sek.$C_4H_9$ | 1 |
| 07 | $i-C_3H_7$ | H | sek.$C_4H_9$ | 1 |
| 08 | $n-C_3H_7$ | H | sek.$C_4H_9$ | 1 |
| 09 | $CH_3$ | H | $C_5H_{11}-2$ | 1 |
| 10 | $n-C_3H_7$ | H | $C_5H_{11}-2$ | 1 |
| 11 | $n-C_4H_9$ | H | $C_5H_{11}-2$ | 1 |
| 12 | $C_2H_5$ | H | cyclo-$C_6H_{11}$ | 1 |
| 13 | $CH_3$ | H | cyclo-$C_6H_{11}$ | 1 |
| 14 | $C_2H_5$ | H | cyclo-$C_5H_9$ | 1 |
| 15 | $C_2H_5$ | H | $C_2H_5$ | 1 |
| 16 | H | $n-C_3H_7$ | $n-C_3H_7$ | 4 |
| 17 | H | $CH_3$ | $n-C_4H_9$ | 4 |
| 18 | H | H | $C_5H_{11}-2$ | 1 |
| 19 | H | H | $CH_2CH=CH_2$ | 2 |
| 20 | H | $CH_2CH=CH_2$ | $CH_2CH=CH_2$ | 1 |
| 21 | $CH_3$ | $CH_2CH=CH_2$ | $CH_2CH=CH_2$ | 1 |
| 22 | $C_2H_5$ | $CH_2CH=CH_2$ | $CH_2CH=CHCH_3$ | 1 |
| 23 | $C_2H_5$ | $C_2H_5$ | $CH_2CH=CH_2$ | 1 |
| 24 | $CH_3$ | $(CH_2)_2CN$ | $C_2H_5$ | 2 |
| 25 | $C_2H_5$ | $(CH_2)_2CN$ | $(CH_2)_2OC_2H_5$ | 2 |

| Beisp. Nr. | R | $R^1$ | $R^2$ | Nuance |
|---|---|---|---|---|
| 26 | $C_2H_5$ | $(CH_2)_2OC_2H_5$ | $(CH_2)_2OC_2H_5$ | 2 |
| 27 | $n\text{-}C_3H_7$ | $(CH_2)_2OiC_3H_7$ | $(CH_2)_2OiC_3H_7$ | 2 |
| 28 | $n\text{-}C_3H_7$ | $(CH_2)_2OCH_3$ | $n\text{-}C_3H_7$ | 2 |

Die vorstehenden Farbstoffe Nr. 24 bis 28 sind neu.

## Tabelle 3

Farbstoffe der Formel

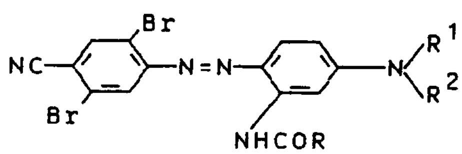

| Beisp. Nr. | R | $R^1$ | $R^2$ | Nuance |
|---|---|---|---|---|
| 01 | $CH_3$ | $C_2H_5$ | $C_2H_5$ | 1 |
| 02 | $C_2H_5$ | $C_2H_5$ | $C_2H_5$ | 1 |
| 03 | $n\text{-}C_3H_7$ | $C_2H_5$ | $C_2H_5$ | 1 |
| 04 | $n\text{-}C_6H_{13}$ | $C_2H_5$ | $C_2H_5$ | 1 |
| 05 | $CH_3$ | $n\text{-}C_3H_7$ | $n\text{-}C_3H_7$ | 1 |
| 06 | $C_2H_5$ | $n\text{-}C_3H_7$ | $n\text{-}C_3H_7$ | 1 |
| 07 | $n\text{-}C_3H_7$ | $n\text{-}C_3H_7$ | $n\text{-}C_3H_7$ | 1 |
| 08 | $i\text{-}C_3H_7$ | $n\text{-}C_3H_7$ | $n\text{-}C_3H_7$ | 1 |
| 09 | sek.$C_4H_9$ | $n\text{-}C_3H_7$ | $n\text{-}C_3H_7$ | 1 |
| 10 | $i\text{-}C_4H_9$ | $n\text{-}C_3H_7$ | $n\text{-}C_3H_7$ | 1 |
| 11 | $C_2H_5$ | $CH_3$ | $CH_3$ | 1 |
| 12 | $n\text{-}C_4H_9$ | $CH_3$ | $CH_3$ | 1 |
| 13 | $CH_3$ | $n\text{-}C_4H_9$ | $n\text{-}C_4H_9$ | 1 |
| 14 | $C_2H_5$ | $n\text{-}C_4H_9$ | $n\text{-}C_4H_9$ | 1 |
| 15 | $CH_3$ | $CH_3$ | $n\text{-}C_3H_7$ | 1 |
| 16 | $n\text{-}C_3H_7$ | $CH_3$ | $n\text{-}C_3H_7$ | 1 |
| 17 | $n\text{-}C_4H_9$ | $CH_3$ | $n\text{-}C_4H_9$ | 1 |
| 18 | $C_2H_5$ | $C_2H_5$ | $n\text{-}C_3H_7$ | 1 |
| 19 | $i\text{-}C_3H_7$ | $C_2H_5$ | $n\text{-}C_3H_7$ | 1 |

| Beisp. Nr. | R | $R^1$ | $R^2$ | Nuance |
|---|---|---|---|---|
| 20 | $C_2H_5$ | $C_2H_5$ | $n-C_5H_{11}$ | 1 |
| 21 | $CH_3$ | $n-C_3H_7$ | $n-C_4H_9$ | 1 |
| 22 | $C_2H_5$ | $n-C_4H_9$ | $n-C_5H_{11}$ | 1 |
| 23 | $CH_3$ | $n-C_5H_{11}$ | $n-C_5H_{11}$ | 1 |
| 24 | $C_2H_5$ | $CH_3$ | $i-C_3H_7$ | 1 |
| 25 | $i-C_3H_7$ | $CH_3$ | $i-C_4H_9$ | 1 |
| 26 | $CH_3$ | $CH_3$ | $C_5H_{11}-3$ | 1 |
| 27 | $n-C_4H_9$ | $C_2H_5$ | $i-C_4H_9$ | 1 |
| 28 | $C_2H_5$ | $n-C_4H_9$ | $i-C_4H_9$ | 1 |
| 29 | $CH_3$ | $n-C_4H_9$ | $C_5H_{11}-2$ | 1 |
| 30 | $C_2H_5$ | $CH_2CH=CH_2$ | $CH_2CH=CH_2$ | 2 |
| 31 | $n-C_3H_7$ | $CH_2CH=CH_2$ | $CH_2CH=CH_2$ | 2 |
| 32 | $CH_3$ | $CH_2CH=CHCH_3$ | $CH_2CH=CH_2$ | 2 |
| 33 | $C_2H_5$ | $C_2H_5$ | $CH_2CH=CH_2$ | 2 |
| 34 | $C_2H_5$ | $n-C_3H_7$ | $CH_2CH=CH_2$ | 2 |
| 35 | $i-C_3H_7$ | H | $n-C_3H_7$ | 2 |
| 36 | $n-C_3H_7$ | H | $i-C_3H_7$ | 2 |
| 37 | $C_2H_5$ | H | $i-C_3H_7$ | 2 |
| 38 | $i-C_4H_9$ | H | $i-C_4H_9$ | 2 |
| 39 | $n-C_3H_7$ | H | $i-C_4H_9$ | 2 |
| 40 | $C_2H_5$ | H | sek.$C_4H_9$ | 2 |
| 41 | $CH_3$ | H | sek.$C_4H_9$ | 2 |
| 42 | $i-C_3H_7$ | H | sek.$C_4H_9$ | 2 |
| 43 | $C_2H_5$ | H | $C_5H_{11}-2$ | 2 |
| 44 | $n-C_3H_7$ | H | $C_5H_{11}-2$ | 2 |
| 45 | $i-C_3H_7$ | H | $C_5H_{11}-2$ | 2 |
| 46 | $CH_3$ | H | $C_5H_{11}-3$ | 2 |
| 47 | $n-C_4H_9$ | H | $C_5H_{11}-3$ | 2 |
| 48 | $CH_3$ | H | cyclo-$C_6H_{11}$ | 2 |
| 49 | $n-C_3H_7$ | H | cyclo-$C_6H_{11}$ | 2 |
| 50 | $CH_3$ | $(CH_2)_2OCH_3$ | $(CH_2)_4OCH_3$ | 1 |
| 51 | $C_2H_5$ | $(CH_2)_2OC_2H_5$ | $C_2H_5$ | 1 |
| 52 | $n-C_3H_7$ | $(CH_2)_2OnC_3H_7$ | $(CH_2)_2CN$ | 2 |
| 53 | $n-C_3H_7$ | $(CH_2)_3CN$ | $n-C_3H_7$ | 2 |

| Beisp. Nr. | R | $R^1$ | $R^2$ | Nuance |
|---|---|---|---|---|
| 54 | n-$C_3H_7$ | $(CH_2)_2CN$ | $(CH_2)_2CN$ | 3 |
| 55 | i-$C_3H_7$ | $(CH_2)_4OCH_3$ | $(CH_2)_4OCH_3$ | 2 |

Die vorstehenden Farbstoffe Nr. 50 bis 55 sind neu.

## Tabelle 4

Farbstoffe der Formel

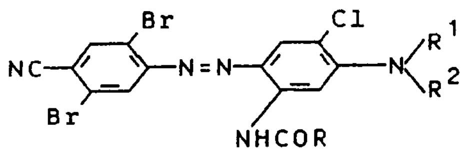

| Beisp. Nr. | R | $R^1$ | $R^2$ | Nuance |
|---|---|---|---|---|
| 01 | $C_2H_5$ | $C_2H_5$ | $C_2H_5$ | 4 |
| 02 | n-$C_3H_7$ | n-$C_3H_7$ | n-$C_3H_7$ | 4 |
| 03 | i-$C_3H_7$ | n-$C_3H_7$ | n-$C_3H_7$ | 4 |
| 04 | n-$C_3H_7$ | H | n-$C_3H_7$ | 1 |
| 05 | $C_2H_5$ | H | i-$C_3H_7$ | 1 |
| 06 | $C_2H_5$ | H | i-$C_4H_9$ | 1 |
| 07 | $CH_3$ | H | sek.$C_4H_9$ | 1 |
| 08 | $C_2H_5$ | H | sek.$C_4H_9$ | 1 |
| 09 | n-$C_3H_7$ | H | sek.$C_4H_9$ | 1 |
| 10 | $CH_3$ | H | $C_5H_{11}$-2 | 1 |
| 11 | i-$C_3H_7$ | H | $C_5H_{11}$-2 | 1 |
| 12 | n-$C_3H_7$ | H | $C_5H_{11}$-3 | 1 |
| 13 | i-$C_3H_7$ | H | $(CH_2)_3CN$ | 2 |
| 14 | n-$C_3H_7$ | $(CH_2)_2CN$ | $(CH_2)_2OC_2H_5$ | 2 |

Die vorstehenden Farbstoffe Nr. 13 und 14 sind neu.

Tabelle 5

Farbstoffe der Formel

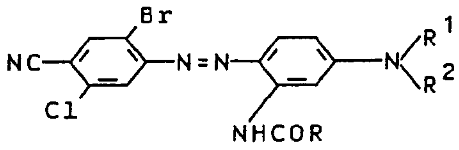

| Beisp. Nr. | R | $R^1$ | $R^2$ | Nuance |
|---|---|---|---|---|
| 01 | $CH_3$ | $n-C_3H_7$ | $n-C_3H_7$ | 1 |
| 02 | $C_2H_5$ | $C_2H_5$ | $C_2H_5$ | 1 |
| 03 | $n-C_3H_7$ | $C_2H_5$ | $C_2H_5$ | 1 |
| 04 | $C_2H_5$ | H | sek.$C_4H_9$ | 1 |
| 05 | $CH_3$ | $CH_2CH=CH_2$ | $CH_2CH=CH_2$ | 2 |
| 06 | $C_2H_5$ | $(CH_2)_2OC_2H_5$ | $(CH_2)_2OC_2H_5$ | 2 |

Der vorstehende Farbstoffe Nr. 6 ist neu.

Tabelle 6

Farbstoffe der Formel

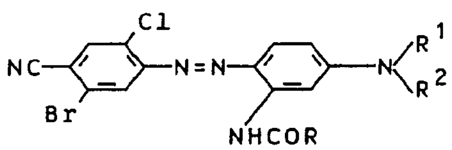

| Beisp. Nr. | R | $R^1$ | $R^2$ | Nuance |
|---|---|---|---|---|
| 01 | $CH_3$ | $C_2H_5$ | $C_2H_5$ | 1 |
| 02 | $i-C_3H_7$ | $C_2H_5$ | $C_2H_5$ | 1 |
| 03 | $C_2H_5$ | $C_2H_5$ | $n-C_3H_7$ | 1 |
| 04 | $n-C_4H_9$ | H | $C_5H_{11}-2$ | 2 |
| 05 | $n-C_3H_7$ | $(CH_2)_2OCH_3$ | $(CH_2)_2CN$ | 2 |

Der vorstehende Farbstoffe Nr. 5 ist neu.

## Tabelle 7

Farbstoffe der Formel

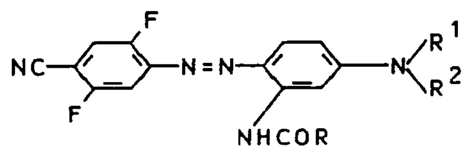

| Beisp. Nr. | R | $R^1$ | $R^2$ | Nuance |
|---|---|---|---|---|
| 01 | $C_2H_5$ | $C_2H_5$ | $C_2H_5$ | 2 |
| 02 | $C_2H_5$ | $CH_2CH=CH_2$ | $CH_2CH=CH_2$ | 3 |
| 03 | $i-C_3H_7$ | $C_2H_5$ | $i-C_4H_9$ | 3 |
| 04 | $n-C_3H_7$ | H | $cyclo-C_5H_9$ | 3 |
| 05 | $i-C_4H_9$ | H | $n-C_4H_9$ | 3 |
| 06 | $CH_3$ | $n-C_3H_7$ | $n-C_3H_7$ | 2 |
| 07 | $n-C_3H_7$ | $C_2H_5$ | $C_2H_5$ | 2 |
| 08 | $CH_3$ | $C_2H_5$ | $(CH_2)_2OC_2H_5$ | 3 |
| 09 | $n-C_3H_7$ | $n-C_3H_7$ | $(CH_2)_2CN$ | 3 |
| 10 | $i-C_3H_7$ | $(CH_2)_2OCH_3$ | $(CH_2)_2OCH_3$ | 3 |

Die vorstehenden Farbstoffe Nr. 8 bis 10 sind neu.

## Tabelle 8

Farbstoffe der Formel

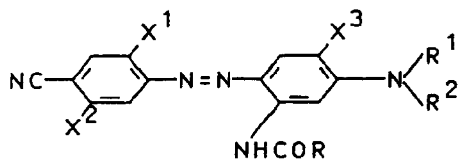

| Beisp. Nr. | $X^1$ | $X^2$ | $X^3$ | R | $R^1$ | $R^2$ | Nuance |
|---|---|---|---|---|---|---|---|
| 01 | F | F | Cl | H | H | $C_5H_{11}$-2 | 3 |
| 02 | F | F | Cl | $C_2H_5$ | H | sek.$C_4H_9$ | 3 |
| 03 | Br | Cl | Cl | $CH_3$ | H | $C_5H_{11}$-3 | 1 |
| 04 | Cl | Cl | $OCH_3$ | $CH_3$ | H | sek.$C_4H_9$ | 1 |
| 05 | F | F | $OCH_3$ | $CH_3$ | H | sek.$C_4H_9$ | 1 |
| 06 | Cl | Cl | $OCH_3$ | $C_2H_5$ | H | $C_5H_{11}$-3 | 1 |
| 07 | Cl | Cl | $OCH_3$ | $C_3H_7$ | H | $C_5H_{11}$-2 | 1 |
| 08 | Cl | Br | Cl | n-$C_3H_7$ | $CH_3$ | i-$C_4H_9$ | 4 |
| 09 | Cl | Br | Cl | $C_2H_5$ | H | i-$C_3H_7$ | 1 |
| 10 | Br | F | H | $CH_3$ | n-$C_3H_7$ | n-$C_3H_7$ | 2 |
| 11 | F | Br | H | n-$C_5H_{11}$ | H | n-$C_5H_{11}$ | 2 |
| 12 | Cl | F | H | $CH_3$ | n-$C_4H_9$ | n-$C_4H_9$ | 2 |
| 13 | Cl | F | H | $C_2H_5$ | $C_2H_5$ | n-$C_3H_7$ | 2 |
| 14 | F | Cl | Cl | n-$C_3H_7$ | H | sek.$C_4H_9$ | 2 |
| 15 | F | Cl | H | $C_2H_5$ | $CH_2CH=CH_2$ | $CH_2CH=CH_2$ | 2 |

Tabelle 9

Farbstoffe der Formel

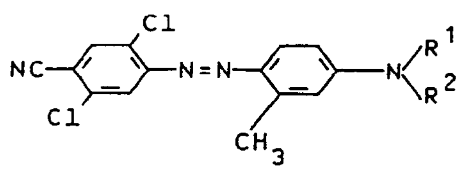

| Beisp. Nr. | $R^1$ | $R^2$ | Nuance |
|---|---|---|---|
| 01 | $(CH_2)_2OC_2H_5$ | $CH_2)_2OC_2H_5$ | 2 |
| 02 | n-$C_3H_7$ | n-$C_3H_7$ | 2 |
| 03 | n-$C_4H_9$ | n-$C_4H_9$ | 2 |

| Beisp. Nr. | $R^1$ | $R^2$ | Nuance |
|---|---|---|---|
| 04 | $n-C_6H_{13}$ | $n-C_6H_{13}$ | 2 |
| 05 | $CH_2CH=CH_2$ | $CH_2CH=CH_2$ | 3 |
| 06 | $CH_2CH=CHCH_3$ | $CH_2CH=CHCH_3$ | 3 |
| 07 | $CH_3$ | $n-C_3H_7$ | 2 |
| 08 | $C_2H_5$ | $n-C_4H_9$ | 2 |
| 09 | $C_2H_5$ | $i-C_4H_9$ | 2 |
| 10 | $C_2H_5$ | $CH_2CH=CH_2$ | 2 |
| 11 | $n-C_3H_7$ | $CH_2CH=CH_2$ | 2 |
| 12 | $(CH_2)_2OC_2H_5$ | $(CH_2)_2OC_2H_5$ | 3 |
| 13 | $C_3H_7$ | $(CH_2)_2CN$ | 2 |
| 14 | $(CH_2)_2OCH_3$ | $(CH_2)_2CN$ | 2 |

Die vorstehenden Farbstoffe Nr. 12 bis 14 sind neu.

Tabelle 10

Farbstoffe der Formel

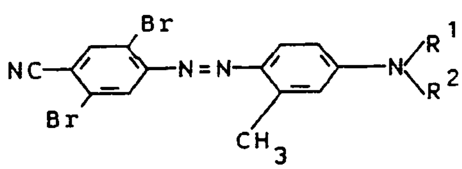

| Beisp. Nr. | $R^1$ | $R^2$ | Nuance |
|---|---|---|---|
| 01 | $CH_3$ | $i-C_4H_9$ | 2 |
| 02 | $C_2H_5$ | $C_2H_5$ | 1 |
| 03 | $n-C_3H_7$ | $n-C_3H_7$ | 1 |
| 04 | $n-C_5H_{11}$ | $n-C_5H_{11}$ | 1 |
| 05 | $CH_2CH=CH_2$ | $CH_2CH=CH_2$ | 2 |
| 06 | $CH_3$ | $n-C_4H_9$ | 2 |
| 07 | $n-C_3H_7$ | $i-C_3H_7$ | 2 |
| 08 | $C_2H_5$ | $CH_2CH=CHCH_3$ | 3 |
| 09 | $(CH_2)_2OCH_3$ | $(CH_2)_2OCH_3$ | 2 |
| 10 | $C_2H_5$ | $(CH_2)_2CN$ | 2 |

Die vorstehenden Farbstoffe Nr.09 und 10 sind neu.

Tabelle 11

Farbstoffe der Formel

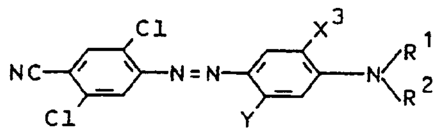

| Beisp. Nr. | $X^3$ | Y | $R^1$ | $R^2$ | Nuance |
|---|---|---|---|---|---|
| 01 | H | Cl | $C_2H_5$ | $C_2H_5$ | 2 |
| 02 | H | $OCH_3$ | $C_3H_7$ | $C_3H_7$ | 1 |
| 03 | $OCH_3$ | $CH_3$ | $C_2H_5$ | $C_2H_5$ | 1 |
| 04 | $OCH_3$ | $CH_3$ | $(CH_2)_2OC_2H_5$ | $C_4H_9$ | 1 |
| 05 | $OCH_3$ | $CH_3$ | H | $iC_3H_7$ | 1 |
| 06 | $OCH_3$ | $CH_3$ | $CH_3$ | $iC_3H_7$ | 1 |
| 07 | $CH_3$ | $NHCOCH_3$ | H | $iC_4H_9$ | 1 |
| 08 | $CH_3$ | $NHCOC_2H_5$ | H | $iC_3H_7$ | 1 |
| 09 | $CH_3$ | $NHCOC_3H_7$ | H | $CH_2CH=CH_2$ | 2 |
| 10 | H | $OCH_3$ | $CH_2CH=CH_2$ | $CH_2CH=CH_2$ | 2 |
| 11 | H | $OCH_3$ | $(CH_2)_2OC_2H_5$ | $C_2H_5$ | 2 |
| 12 | H | $OCH_3$ | $n-C_3H_7$ | $(CH_2)_3CN$ | 2 |
| 13 | $OCH_3$ | $CH_3$ | $CH_2CH=CH_2$ | $CH_2CH=CH_2$ | 2 |
| 14 | $OCH_3$ | $CH_3$ | $CH_2CH=CH_2$ | $(CH_2)_2CN$ | 3 |

Die vorstehenden Farbstoffe Nr. 10 bis 14 sind neu.

Tabelle 12

Farbstoffe der Formel

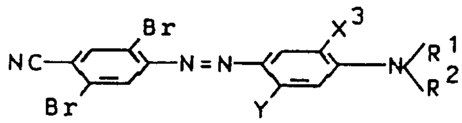,

| Beisp. Nr. | $X^3$ | Y | $R^1$ | $R^2$ | Nuance |
|---|---|---|---|---|---|
| 01 | H | Cl | $C_2H_5$ | $C_2H_5$ | 2 |
| 02 | H | $OCH_3$ | $C_3H_7$ | $C_3H_7$ | 1 |
| 03 | $OCH_3$ | $CH_3$ | H | $C_2H_5$ | 1 |
| 04 | $CH_3$ | $NHCOCH_3$ | H | $iC_4H_9$ | 1 |
| 05 | $OCH_3$ | $CH_3$ | H | $iC_3H_7$ | 1 |
| 06 | H | $OCH_3$ | $C_2H_5$ | $CH_2CH{=}CH_2$ | 2 |
| 07 | H | $OCH_3$ | $(CH_2)_2OnC_3H_7$ | $(CH_2)_2OnC_3H_7$ | 2 |
| 08 | $OCH_3$ | $CH_3$ | $CH_2CH{=}CH_2$ | $CH_2CH{=}CH_2$ | 2 |
| 09 | $OCH_3$ | $CH_3$ | $(CH_2)_2OCH_3$ | $C_2H_5$ | 2 |

Die vorstehenden Farbstoffe Nr. 6 bis 9 sind neu.

## Patentansprüche

1. Verwendung von wasserunlöslichen Monoazofarbstoffen für das Sublimations-Transferverfahren, dadurch gekennzeichnet, daß ein Farbstoff der allgemeinen Formel I

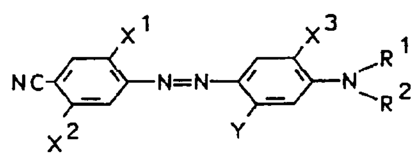

(I)

worin
$X^1$, $X^2$ Fluor, Chlor oder Brom,
$X^3$ Wasserstoff, Chlor, Methyl oder Alkoxy mit 1 bis 4 C-Atomen,
Y Wasserstoff, Chlor, Methyl, Alkoxy mit 1 bis 4 C-Atomen oder -NHCOR,
R Wasserstoff oder Alkyl mit 1 bis 6 C-Atomen,
$R^1$ Wasserstoff, Alkyl mit 1 bis 6 C-Atomen, Alkenyl mit 3 bis 5 C-Atomen, $-(CH_2)_nOR^3$, $-(CH_2)_nCN$,
$R^2$ Alkyl mit 1 bis 6 C-Atomen, Alkenyl mit 3 bis 5 C-Atomen, Cyclopentyl, Cyclohexyl, $-(CH_2)_mCN$, $-(CH_2)_mOR^4$,
$R^3$, $R^4$ Alkyl mit 1 bis 6 C-Atomen, Alkenyl mit 3 bis 5 C-Atomen,
n, m 2, 3 oder 4,
bedeuten,
oder ein Gemisch von Farbstoffen der Formel I, gegebenenfalls im Gemisch mit anderen Farbstoffen, verwendet wird.

2. Verwendung nach Anspruch 1, dadurch gekennzeichnet, daß $X^1$ und $X^2$ gleich sind und Brom, vorzugsweise Chlor, bedeuten.

3. Verwendung nach Anspruch 1 und/oder 2, dadurch gekennzeichnet, daß $R^1$ und/oder $R^2$ lineares Alkyl mit 1 bis 4 C-Atomen oder Allyl bedeuten.

4. Verwendung nach einem oder mehreren der Ansprüche 1 bis 3, dadurch gekennzeichnet, daß $R^1$ und $R^2$ gleich sind.

5. Verwendung nach einem oder mehreren der Ansprüche 1 bis 4, dadurch gekennzeichnet, daß $X^3$ Was-

serstoff bedeutet.

6. Farbstoffträger für das Sublimations-Transferverfahren, dadurch gekennzeichnet, daß er mit einer Schicht beschichtet ist, die einen Farbstoff der allgemeinen Formel I

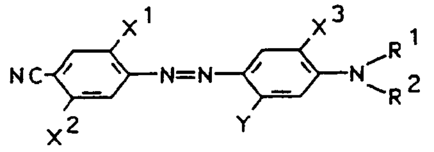

(I)

worin
$X^1$, $X^2$ Fluor, Chlor oder Brom,
$X^3$ Wasserstoff, Chlor, Methyl oder Alkoxy mit 1 bis 4 C-Atomen,
Y Wasserstoff, Chlor, Methyl, Alkoxy mit 1 bis 4 C-Atomen oder -NHCOR,
R Wasserstoff oder Alkyl mit 1 bis 6 C-Atomen,
$R^1$ Wasserstoff, Alkyl mit 1 bis 6 C-Atomen, Alkenyl mit 3 bis 5 C-Atomen, $-(CH_2)_nOR^3$, $-(CH_2)_nCN$,
$R^2$ Alkyl mit 1 bis 6 C-Atomen, Alkenyl mit 3 bis 5 C-Atomen, Cyclopentyl, Cyclohexyl, $-(CH_2)_mCN$, $-(CH_2)_mOR^4$,
$R^3$, $R^4$ Alkyl mit 1 bis 6 C-Atomen, Alkenyl mit 3 bis 5 C-Atomen,
n, m 2, 3 oder 4,
bedeuten, oder ein Gemisch derartiger Farbstoffe, gegebenenfalls im Gemisch mit anderen Farbstoffen enthält.

7. Verfahren zur Herstellung von Farbstoffträgern nach Anspruch 6, dadurch gekennzeichnet, daß ein Trägermaterial mit einer Druckfarbe beschichtet wird, die einen Farbstoff der allgemeinen Formel I

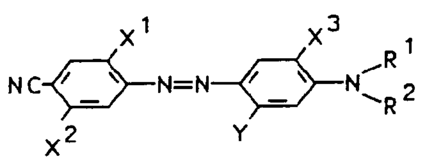

(I)

worin
$X^1$, $X^2$ Fluor, Chlor oder Brom,
$X^3$ Wasserstoff, Chlor, Methyl oder Alkoxy mit 1 bis 4 C-Atomen,
Y Wasserstoff, Chlor, Methyl, Alkoxy mit 1 bis 4 C-Atomen oder -NHCOR,
R Wasserstoff oder Alkyl mit 1 bis 6 C-Atomen,
$R^1$ Wasserstoff, Alkyl mit 1 bis 6 C-Atomen, Alkenyl mit 3 bis 5 C-Atomen, $-(CH_2)_nOR^3$, $-(CH_2)_nCN$,
$R^2$ Alkyl mit 1 bis 6 C-Atomen, Alkenyl mit 3 bis 5 C-Atomen, Cyclopentyl, Cyclohexyl, $-(CH_2)_mCN$, $-(CH_2)_mOR^4$,
$R^3$, $R^4$ Alkyl mit 1 bis 6 C-Atomen, Alkenyl mit 3 bis 5 C-Atomen,
n, m 2, 3 oder 4,
bedeuten,
oder Gemische von Farbstoffen der Formel I, gegebenenfalls im Gemisch mit anderen Farbstoffen, enthält.

8. Verfahren zur Übertragung von Farbstoffen von einem Träger durch kurzzeitige örtliche Wärmezufuhr auf ein Aufzeichnungsmaterial, dadurch gekennzeichnet, daß man einen Träger verwendet, auf dem ein Farbstoff der allgemeinen Formel I

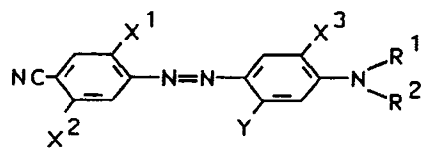

(I)

worin
$X^1$, $X^2$ Fluor, Chlor oder Brom,
$X^3$ Wasserstoff, Chlor, Methyl oder Alkoxy mit 1 bis 4 C-Atomen,
Y Wasserstoff, Chlor, Methyl, Alkoxy mit 1 bis 4 C-Atomen oder -NHCOR,
R Wasserstoff oder Alkyl mit 1 bis 6 C-Atomen,
$R^1$ Wasserstoff, Alkyl mit 1 bis 6 C-Atomen, Alkenyl mit 3 bis 5 C-Atomen, $-(CH_2)_nOR^3$, $-(CH_2)_nCN$,
$R^2$ Alkyl mit 1 bis 6 C-Atomen, Alkenyl mit 3 bis 5 C-Atomen, Cyclopentyl, Cyclohexyl, $-(CH_2)_mCN$, $-(CH_2)_mOR^4$,
$R^3$, $R^4$ Alkyl mit 1 bis 6 C-Atomen, Alkenyl mit 3 bis 5 C-Atomen,
n, m 2, 3 oder 4,
bedeuten,
oder ein Gemisch derartiger Farbstoffe, gegebenenfalls im Gemisch mit anderen Farbstoffen, aufgebracht ist.

**9.** Farbstoff der allgemeinen Formel I

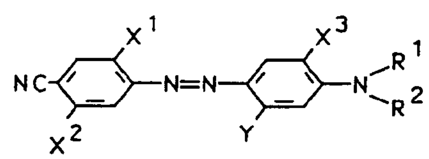

(I)

worin
$X^1$, $X^2$ Fluor, Chlor oder Brom,
$X^3$ Wasserstoff, Chlor, Methyl oder Alkoxy mit 1 bis 4 C-Atomen,
Y Wasserstoff, Chlor, Methyl, Alkoxy mit 1 bis 4 C-Atomen oder -NHCOR,
R Wasserstoff oder Alkyl mit 1 bis 6 C-Atomen,
$R^1$ Wasserstoff, Alkyl mit 1 bis 6 C-Atomen, Alkenyl mit 3 bis 5 C-Atomen, $-(CH_2)_nOR^3$, $-(CH_2)_nCN$,
$R^2$ Alkyl mit 1 bis 6 C-Atomen, Alkenyl mit 3 bis 5 C-Atomen, Cyclopentyl, Cyclohexyl, $-(CH_2)_mCN$, $-(CH_2)_mOR^4$,
$R^3$, $R^4$ Alkyl mit 1 bis 6 C-Atomen, Alkenyl mit 3 bis 5 C-Atomen,
n, m 2, 3 oder 4,
bedeuten,
mit der Maßgabe, daß wenn $R^1$ Wasserstoff, Alkyl mit 1 bis 6 C-Atomen oder Alkenyl mit 3 bis 5 C-Atomen ist, Y nicht Wasserstoff, Chlor, Methyl oder -NHCOR sein kann.

**10.** Verfahren zur Herstellung von Azofarbstoffen der Formel I des Anspruchs 9, dadurch gekennzeichnet, daß man eine Diazoniumverbindung eines Amins der Formel II

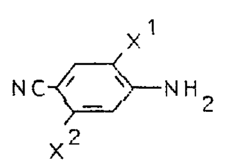

(II)

auf eine Kupplungskomponente der allgemeinen Formel III

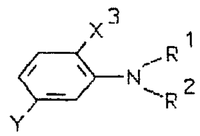

(III)

in der Y, $X^1$, $X^2$, $X^3$, $R^1$ und $R^2$ die in Anspruch 9 angegebenen Bedeutungen besitzen, kuppelt.

## Claims

1. Use of water-insoluble monoazo dyes for the sublimation transfer process, characterized in that a dye of the general formula I

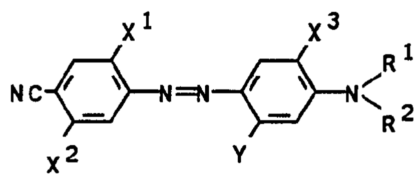

(I)

where
$X^1$ and $X^2$ are each fluorine, chlorine or bromine,
$X^3$ is hydrogen, chlorine, methyl or alkoxy of 1 to 4 carbon atoms,
Y is hydrogen, chlorine, methyl, alkoxy of 1 to 4 carbon atoms or -NHCOR,
R is hydrogen or alkyl of 1 to 6 carbon atoms,
$R^1$ is hydrogen, alkyl of 1 to 6 carbon atoms, alkenyl of 3 to 5 carbon atoms, $-(CH_2)_nOR^3$ or - $(CH)_2CN$,
$R^2$ is alkyl of 1 to 6 carbon atoms, alkenyl of 3 to 5 carbon atoms, cyclopentyl, cyclohexyl, - $(CH_2)_mCN$ or $-(CH_2)_mOR^4$,
$R^3$ and $R^4$ are each alkyl of 1 to 6 carbon atoms or alkenyl of 3 to 5 carbon atoms, and
n and m are each 2, 3 or 4,
or a mixture of dyes of formula I with or without the addition of other dyes is used.

2. Use according to Claim 1, charactericed in that $X^1$ and $X^2$ are identical and denote bromine or preferably chlorine.

3. Use according to Claim 1 and/or 2, characterized in that $R^1$ and/or $R^2$ is linear alkyl of 1 to 4 carbon atoms or allyl.

4. Use according to one or more of Claims 1 to 3, characterized in that $R^1$ and $R^2$ are identical.

5. Use according to one or more of Claims 1 to 4, characterized in that $X^3$ is hydrogen.

6. Transfer for the sublimation transfer process, characterized in that it bears a layer which contains a dye of the general formula I

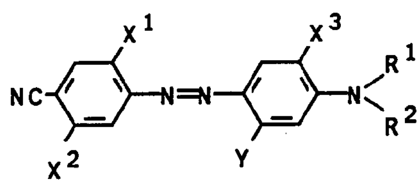

(I)

where
$X^1$ and $X^2$ are each fluorine, chlorine or bromine,
$X^3$ is hydrogen, chlorine, methyl or alkoxy of 1 to 4 carbon atoms,
Y is hydrogen, chlorine, methyl, alkoxy of 1 to 4 carbon atoms or -NHCOR,

R is hydrogen or alkyl of 1 to 6 carbon atoms,
$R^1$ is hydrogen, alkyl of 1 to 6 carbon atoms, alkenyl of 3 to 5 carbon atoms, - $(CH_2)_nOR^3$ or - $(CH)_2CN$,
$R^2$ is alkyl of 1 to 6 carbon atoms, alkenyl of 3 to 5 carbon atoms, cyclopentyl, cyclohexyl, - $(CH_2)_mCN$ or - $(CH_2)_mOR^4$,
$R^3$ and $R^4$ are each alkyl of 1 to 6 carbon atoms or alkenyl of 3 to 5 carbon atoms, and
n and m are each 2, 3 or 4,
or a mixture of dyes of formula I with or without the addition of other dyes.

**7.** Process for preparing transfers according to Claim 6, characterized in that a substrate material is coated with a printing ink which contains a dye of the general formula I

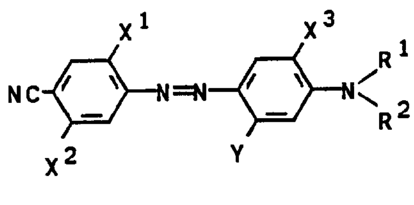

(I)

where
$X^1$ and $X^2$ are each fluorine, chlorine or bromine,
$X^3$ is hydrogen, chlorine, methyl or alkoxy of 1 to 4 carbon atoms,
Y is hydrogen, chlorine, methyl, alkoxy of 1 to 4 carbon atoms or -NHCOR,
R is hydrogen or alkyl of 1 to 6 carbon atoms,
$R^1$ is hydrogen, alkyl of 1 to 6 carbon atoms, alkenyl of 3 to 5 carbon atoms, $-(CH_2)_nOR^3$ or - $(CH)_2CN$,
$R^2$ is alkyl of 1 to 6 carbon atoms, alkenyl of 3 to 5 carbon atoms, cyclopentyl, cyclohexyl, - $(CH_2)_mCN$ or $-(CH_2)_mOR^4$,
$R^3$ and $R^4$ are each alkyl of 1 to 6 carbon atoms or alkenyl of 3 to 5 carbon atoms, and
n and m are each 2, 3 or 4,
or mixtures of dyes of formula I with or without the addition of other dyes.

**8.** Process for transferring dyes from a transfer to a recording material by brief local heating, characterized in that the transfer used bears a dye of the general formula I

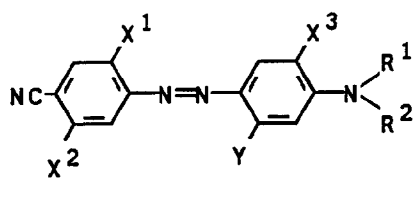

(I)

where
$X^1$ and $X^2$ are each fluorine, chlorine or bromine,
$X^3$ is hydrogen, chlorine, methyl or alkoxy of 1 to 4 carbon atoms,
Y is hydrogen, chlorine, methyl, alkoxy of 1 to 4 carbon atoms or -NHCOR,
R is hydrogen or alkyl of 1 to 6 carbon atoms,
$R^1$ is hydrogen, alkyl of 1 to 6 carbon atoms, alkenyl of 3 to 5 carbon atoms, $-(CH_2)_nOR^3$ or $-(CH)_2CN$,
$R^2$ is alkyl of 1 to 6 carbon atoms, alkenyl of 3 to 5 carbon atoms, cyclopentyl, cyclohexyl, $-(CH_2)_mCN$ or $-(CH_2)_mOR^4$,
$R^3$ and $R^4$ are each alkyl of 1 to 6 carbon atoms or alkenyl of 3 to 5 carbon atoms, and
n and m are each 2, 3 or 4,
or a mixture of such dyes with or without the addition of other dyes.

**9.** Dye of the general formula I

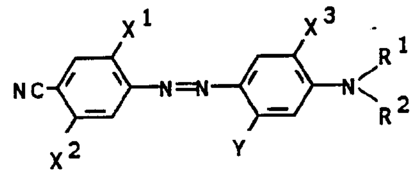

(I)

where
$X^1$ and $X^2$ are each fluorine, chlorine or bromine,
$X^3$ is hydrogen, chlorine, methyl or alkoxy of 1 to 4 carbon atoms,
Y is hydrogen, chlorine, methyl, alkoxy of 1 to 4 carbon atoms or -NHCOR,
R is hydrogen or alkyl of 1 to 6 carbon atoms,
$R^1$ is hydrogen, alkyl of 1 to 6 carbon atoms, alkenyl of 3 to 5 carbon atoms, $-(CH_2)_nOR^3$ or $-(CH)_2CN$,
$R^2$ is alkyl of 1 to 6 carbon atoms, alkenyl of 3 to 5 carbon atoms, cyclopentyl, cyclohexyl, $-(CH_2)_mCN$ or $-(CH_2)_mOR^4$,
$R^3$ and $R^4$ are each alkyl of 1 to 6 carbon atoms or alkenyl of 3 to 5 carbon atoms, and
n and m are each 2, 3 or 4,
with the proviso that when $R^1$ is hydrogen, alkyl of 1 to 6 carbon atoms or alkenyl of 3 to 5 carbon atoms, Y cannot be hydrogen, chlorine, methyl or -NHCOR.

**10.** Process for preparing azo dyes of the formula I of Claim 9, characterized in that a diazonium compound of an amine of the formula II

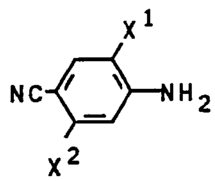

(II)

is coupled onto a coupling component of the general formula III

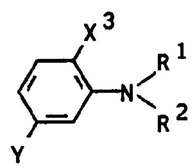

(III)

where Y, $X^1$, $X^2$, $X^3$, $R^1$ and $R^2$ are each as defined in Claim 9.

## Revendications

**1.** Utilisation de colorants monoazoïques insolubles dans l'eau pour le procédé de transfert par sublimation, caractérisée en ce qu'on utilise un colorant répondant à la formule générale I :

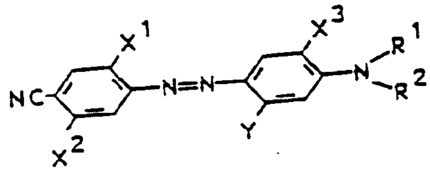

(I)

dans laquelle
$X^1$, $X^2$ désignent des atomes de fluor, de chlore ou de brome,
$X^3$ désigne l'atome d'hydrogène, l'atome de chlore, les groupes méthyle ou alcoxy en $C_1$-$C_4$,
Y désigne l'atome d'hydrogène, l'atome de chlore, les groupes méthyle, alcoxy en $C_1$-$C_4$ ou -NHCOR,

R désigne l'atome d'hydrogène ou un groupe alkyle en $C_1$-$C_6$,
$R^1$ désigne l'atome d'hydrogène, un groupe alkyle en $C_1$-$C_6$, alcényle en $C_3$-$C_5$, $-(CH_2)_nOR^3$, $-(CH)_2CN$,
$R^2$ désigne un groupe alkyle en $C_1$-$C_6$, alcényle en $C_3$-$C_5$, cyclopentyle, cyclohexyle, $-(CH_2)_mCN$, $-(CH_2)_mOR^4$,
$R^3$, $R^4$ désignent des groupes alkyle en $C_1$-$C_6$, alcényle en $C_3$-$C_5$,
n et m sont égaux à 2, 3 ou 4,
ou un mélange de colorants répondant à la formule I, le cas échéant en mélange avec d'autres colorants.

2. Utilisation selon la revendication 1, caractérisée en ce que $X^1$ et $X^2$ sont identiques et désignent l'atome de brome, de préférence l'atome de chlore.

3. Utilisation selon la revendication 1 et/ou la revendication 2, caractérisée en ce que $R^1$ et/ou $R^2$ désignent un groupe alkyle linéaire en $C_1$ -$C_4$ ou un groupe allyle.

4. Utilisation selon une ou plusieurs des revendications 1 à 3, caractérisée en ce que $R^1$ et $R^2$ sont identiques.

5. Utilisation selon une ou plusieurs des revendications 1 à 4, caractérisée en ce que $X^3$ désigne l'atome d'hydrogène.

6. Support de colorants pour le procédé de transfert par sublimation, caractérisé en ce qu'il est enduit d'une couche qui contient un colorant répondant à la formule générale I :

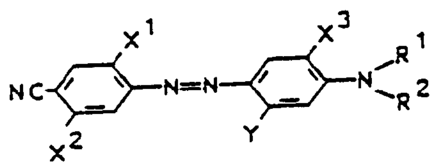

(I)

dans laquelle
$X^1$, $X^2$ désignent les atomes de fluor, de chlore ou de brome,
$X^3$ désigne l'atome d'hydrogène, l'atome de chlore, les groupes méthyle ou alcoxy en $C_1$-$C_4$,
Y désigne l'atome d'hydrogène, l'atome de chlore, les groupes méthyle, alcoxy en $C_1$-$C_4$ ou -NHCOR,
R désigne l'atome d'hydrogène ou un groupe alkyle en $C_1$-$C_6$,
$R^1$ désigne l'atome d'hydrogène, un groupe alkyle en $C_1$-$C_6$, alcényle en $C_3$-$C_5$, $-(CH_2)_nOR^3$, $-(CH)_2CN$,
$R^2$ désigne un groupe alkyle en $C_1$-$C_6$, alcényle en $C_3$-$C_5$, cyclopentyle, cyclohexyle, $-(CH_2)_mCN$, $-(CH_2)_mOR^4$,
$R^3$, $R^4$ désignent des groupes alkyle en $C_1$-$C_6$, alcényle en $C_3$-$C_5$,
n et m sont égaux à 1, 3 ou 4,
ou un mélange de ces colorants, le cas échéant en mélange avec d'autres colorants.

7. Procédé de préparation de supports de colorants selon la revendication 6, caractérisé en ce qu'on enduit une matière de support d'une pâte d'impression qui contient un colorant répondant à la formule générale I :

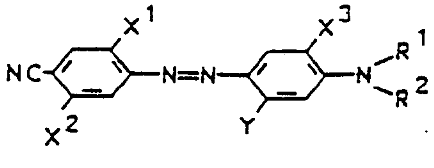

(I)

dans laquelle
$X^1$, $X^2$ désignent les atomes de fluor, de chlore ou de brome,
$X^3$ désigne l'atome d'hydrogène, l'atome de chlore, les groupes méthyle ou alcoxy en $C_1$-$C_4$,
Y désigne l'atome d'hydrogène, l'atome de chlore, les groupes méthyle, alcoxy en $C_1$-$C_4$ ou -NHCOR,
R désigne l'atome d'hydrogène ou un groupe alkyle en $C_1$-$C_6$,
$R^1$ désigne l'atome d'hydrogène, un groupe alkyle en $C_1$-$C_6$, alcényle en $C_3$-$C_5$, $-(CH_2)_nOR^3$, $-(CH_2)_mCN$,
$R^2$ désigne un groupe alkyle en $C_1$-$C_6$, alcényle en $C_3$-$C_5$, cyclopentyle, cyclohexyle, $-(CH_2)_mCN$,

-$(CH_2)_mOR^4$,
$R^3$, $R^4$ désignent des groupes alkyle en $C_1$-$C_6$, alcényle en $C_3$-$C_5$,
n et m sont égaux à 1, 3 ou 4,
ou des mélanges de colorants répondant à la formule I, le cas échéant en mélange avec d'autres colorants.

**8.** Procédé de transfert de colorants d'un support sur une matière d'enregistrement par un apport de chaleur local de courte durée, caractérisé en ce qu'on utilise un support sur lequel a été appliqué un colorant répondant à la formule générale I :

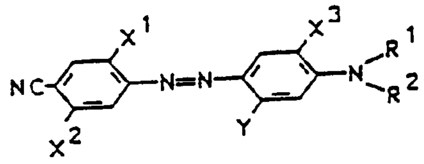

(I)

dans laquelle
$X^1$, $X^2$ désignent les atomes de fluor, de chlore ou de brome,
$X^3$ désigne l'atome d'hydrogène, l'atome de chlore, les groupes méthyle ou alcoxy en $C_1$-$C_4$,
Y désigne l'atome d'hydrogène, l'atome de chlore, les groupes méthyle, alcoxy en $C_1$-$C_4$ ou -NHCOR,
R désigne l'atome d'hydrogène ou un groupe alkyle en $C_1$-$C_6$,
$R^1$ désigne l'atome d'hydrogène, un groupe alkyle en $C_1$-$C_6$, alcényle en $C_3$-$C_5$, -$(CH_2)_nOR^3$, -$(CH)_2CN$,
$R^2$ désigne un groupe alkyle en $C_1$-$C_6$, alcényle en $C_3$-$C_5$, cyclopentyle, cyclohexyle, -$(CH_2)_mCN$, -$(CH_2)_mOR^4$,
$R^3$, $R^4$ désignent des groupes alkyle en $C_1$-$C_6$, alcényle en $C_3$-$C_5$,
n et m sont égaux à 1, 3 ou 4,
ou un mélange de ces colorants, le cas échéant en mélange avec d'autres colorants.

**9.** Colorant répondant à la formule générale I :

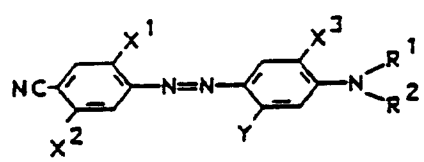

(I)

dans laquelle
$X^1$, $X^2$ désignent les atomes de fluor, de chlore ou de brome,
$X^3$ désigne l'atome d'hydrogène, l'atome de chlore, les groupes méthyle ou alcoxy en $C_1$-$C_4$,
Y désigne l'atome d'hydrogène, l'atome de chlore, les groupes méthyle, alcoxy en $C_1$-$C_4$ ou -NHCOR,
R désigne l'atome d'hydrogène ou un groupe alkyle en $C_1$-$C_6$,
$R^1$ désigne l'atome d'hydrogène, un groupe alkyle en $C_1$-$C_6$, alcényle en $C_3$-$C_5$, -$(CH_2)_nOR^3$, -$(CH)_2CN$,
$R^2$ désigne un groupe alkyle en $C_1$-$C_6$, alcényle en $C_3$-$C_5$, cyclopentyle, cyclohexyle, -$(CH_2)_mCN$, -$(CH_2)_mOR^4$,
$R^3$, $R^4$ désignent des groupes alkyle en $C_1$-$C_6$, alcényle en $C_3$-$C_5$,
n et m sont égaux à 1, 3 ou 4,
sous réserve que lorsque $R^1$ est un atome d'hydrogène, un groupe alkyle en $C_1$-$C_6$ ou un groupe alcényle en $C_3$-$C_5$, Y ne peut pas être un atome d'hydrogène, de chlore, un groupe méthyle ou -NHCOR.

**10.** Procédé de préparation de colorants azoïques répondant à la formule I selon la revendication 9, caractérisé en ce qu'on copule un composé diazonium d'une amine répondant à la formule II

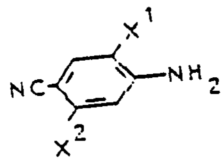

(II)

sur un constituant de copulation répondant à la formule générale III

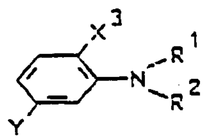

(III)

dans laquelle Y, $X^1$, $X^2$, $X^3$, $R^1$ et $R^2$ ont les significations indiquées dans la revendication 9.